# EUROPEAN PATENT APPLICATION

(11) **EP 2 452 922 A1**
(43) Date of publication of application: **16.05.2012**
(21) Application number: 10722149.1
(22) Date of filing: 21.04.2010
(51) Int. Cl.: C02F 1/00, C02F 1/24, C02F 1/52

(54) **PARTICLE SEPARATION TANK**

(30) Priority: 10.07.2009 ES 200930439
(71) Applicant: Acciona Agua, S.A.U., 28100 Alcobendas (Madrid) (ES)
(72) Inventor: ARIÑO ALEJANDRE, Francisco Javier, E-28100 Alcobendas (Madrid) (ES)
(74) Representative: Pons Ariño, Angel
(86) International application number: PCT/ES2010/070244
(87) International publication number: WO 2011/004042

(57) **Abstract**

The invention relates to a tank for optimising the process of separating flocculates found in seawater or in wastewater, said tank (10) including a container (1), a sand filter (2) located at the bottom of the container (1), and a nozzle (3) located above the sand filter (2), which includes an inner lid (9) driving a flow (4) consisting of the mixture of air-saturated water and seawater previously inserted in the nozzle (3) via a plurality of tubes (5). The air-saturated water creates microbubbles (6) which drag the flocculates toward the top of the tank (10), where said flocculates build up to form a layer of sludge (7) which is periodically collected. Further, the tank (10) has a lid (8) located between the nozzle (3) and the outer surface.

## Description

### OBJECT OF THE INVENTION

The present invention belongs to the field of water treatment systems or devices, and more specifically to an apparatus for cleaning water which has suspended particles.

The main objective of the present invention is a tank for separating suspended particles in seawater or wastewater, both being mixed inside a nozzle.

### BACKGROUND OF THE INVENTION

Currently there are different particle separation tank models; the most well-known amongst them is the CocoDAFF, patented by Thames Water, GB2263694A. This British patent discloses a method and apparatus for extracting solid impurities from a liquid flow by means of flotation, using tiny gas bubbles. The gas is introduced at a height approximate to half of the tank, while the water with impurities is introduced a bit closer to the surface, exiting through the bottom of the tank through a sand filter. Thus, the water crosses the micro-bubbles on its descending path, and the micro-bubbles drag the solid impurities upwards.

There exists another type of application, not for seawater, which is based on the concept of a column of water with air with a cylinder inside the tank, such as, for example, that developed by the German company ENVIPLAN, the model AQUATECTOR® *Microfloat®.*

These tanks have a low particle separation efficiency, featuring a small contact surface area between bubbles and floc particles (organic material formed by suspended particles), further using several components (air diffuser, water pressure cone, etc.) to do this, with the subsequent increased economic cost.

The coagulation-flocculation forms part of the drinking water treatment of surface water and of the domestic, industrial, and mining water treatment processes. These coagulation-flocculation processes facilitate the removal of the suspended substances and colloidal particles. Coagulation is the destabilisation of the colloidal particles caused by the addition of a chemical reagent called coagulant, which, by neutralising its electrostatic charges, makes the particles tend to bind to each other. Likewise, flocculation is the agglomeration of destabilised particles in micro-floc particles and then in larger floc particles which tend to be deposited in the bottom of the recipients built for this purpose, called sedimentators.

The factors which can promote coagulation and flocculation are the speed gradient, the temperature and the pH. The temperature and the speed gradient are important as they increase the probability that the particles bind to each other, and a suitable pH level, for a given water, permitting a good coagulation to be registered - flocculation in the shortest amount of time possible.

### DESCRIPTION OF THE INVENTION

An optimisation of the separation of floc particles present in seawater is achieved by means of the particle separation tank object of the present invention, increasing the efficiency of the previously mentioned tanks and using a lesser number of necessary components, with the consequent economic savings in installation.

The particle separation tank comprises a recipient intended to house seawater or wastewater, a sand filter located in the lower part of the recipient, and a nozzle situated above the sand filter, which propels a flow towards the exterior surface of the tank.

This flow is formed by the mixture of water saturated with air and seawater which has been submitted to a coagulation-flocculation process, said mixture being made inside the nozzle. Both types of water are introduced in the nozzle by means of piping.

The water saturated with air creates micro-bubbles, of variable size depending on the pressure and speed of the outlet flow. These micro-bubbles draw the floc particles and causes them to rise towards the upper part of the tank, where they accumulate, forming a layer of sludge which is periodically collected and removed. The air coming from the micro-bubbles escapes upon coming into contact with the atmosphere, while the now clean water, free of particles, is extracted through the sand filter located at the base of the recipient.

Additionally, the particle separation tank object of the invention comprises a lid located between the nozzle and the outer surface of the recipient, whose purpose is to increase the retention time of the micro-bubbles inside the tank, thus increasing the contact area between micro-bubbles and floc particles, and therefore, their separation. Said lid can be of variable size and dimension, preferably being of a circular, flat and narrow configuration.

The nozzle is preferably housed in the centre of the base of the recipient and features a truncated-conical configuration, being wider at its base and getting narrower at its upper end. Likewise, said nozzle has an inner concentric lid and features a vertical section at its peripheral base which is inserted into the lower surface of the recipient, and wherethrough circulates the piping which introduces the water saturated with air and seawater.

It should be pointed out that the seawater which enters the tank can previously pass through a coagulation-flocculation process, wherein the suitable chemical reagents (for example iron or aluminium trichloride, after pH correction of water) are added to produce an optimal coagulation.

Thus, a greater distance for the micro-bubbles to cover is achieved by means of the particle separation tank disclosed herein, and therefore, a greater distribution of the micro-bubbles inside the tank, increasing the contact between micro-bubbles and floc particles, and consequently a greater detection and separation thereof.

### DESCRIPTION OF THE DRAWINGS

In order to complement the description being carried out and with the purpose of helping towards a better understanding of the characteristics of the invention, in accordance with a preferred example of practical embodiment thereof, a set of drawings is attached as an integral part of said description, wherein the following, in an illustrative and non-limitative character, has been represented:
Figure 1 shows a general sectional view of the particle separation tank object of the invention.
Figure 2 shows a sectional view of the nozzle wherein the piping which introduces the water saturated with air and the seawater is observed.
Figure 3 shows a plan view of the nozzle wherein the disposition of the previously mentioned piping is observed.

### PREFERRED EMBODIMENT OF THE INVENTION

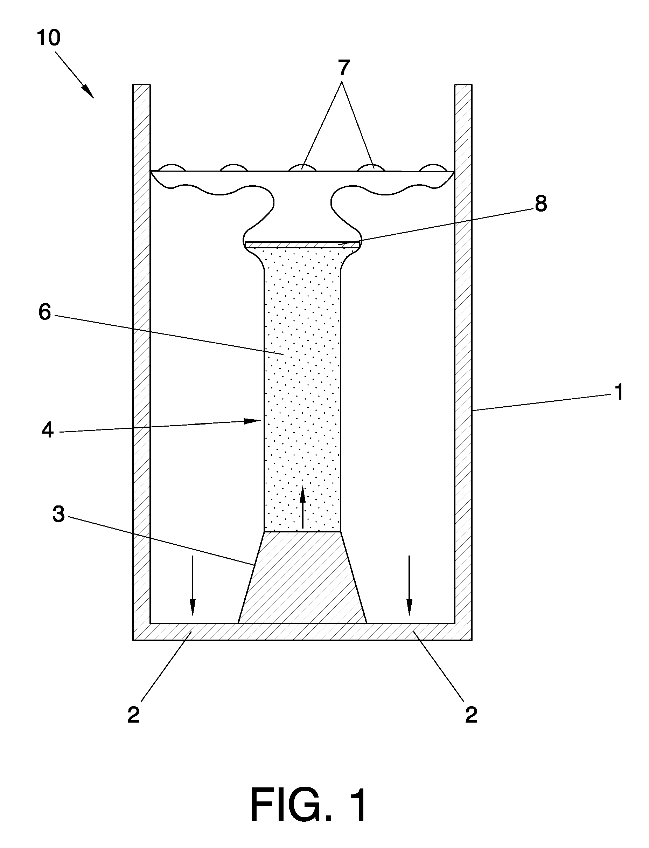

As can be observed in figure 1, the particle separation tank (10) comprises a recipient (1), a sand filter (2) located at the base of the recipient (1), and a nozzle (3) situated above the sand filter (2) which propels a flow (4) towards the outer surface of the tank (10), said flow (4) being formed by the mixture of water saturated with air and seawater which has been submitted to a coagulation-flocculation process, said mixture being made inside the nozzle (3) and both types of water being introduced in the nozzle (3) by means of piping (5).

The water saturated with air creates micro-bubbles (6), of variable size depending on the pressure and speed of the outlet flow (4). These micro-bubbles (6) drag the floc particles and cause them to rise towards the upper part of the tank (10), where they accumulate, forming a layer of sludge (7), which is periodically collected and removed. The air coming from the micro-bubbles (6) escapes upon coming into contact with the atmosphere, while the now clean water, free of particles, is extracted through the sand filter (2) located at the base of the recipient (1).

The particle separation tank (10) object of the invention further comprises a lid (8), represented in figure 1, of circular, flat and narrow configuration, which is preferably located in the central axis of the recipient (1), between the nozzle (3) and the outer surface, whose purpose is to increase the retention time of the micro-bubbles (6) inside the tank (10), thus increasing the contact area between micro-bubbles (6) and floc particles, and therefore, their detection, separation, and subsequent removal in the layer of sludge (7).

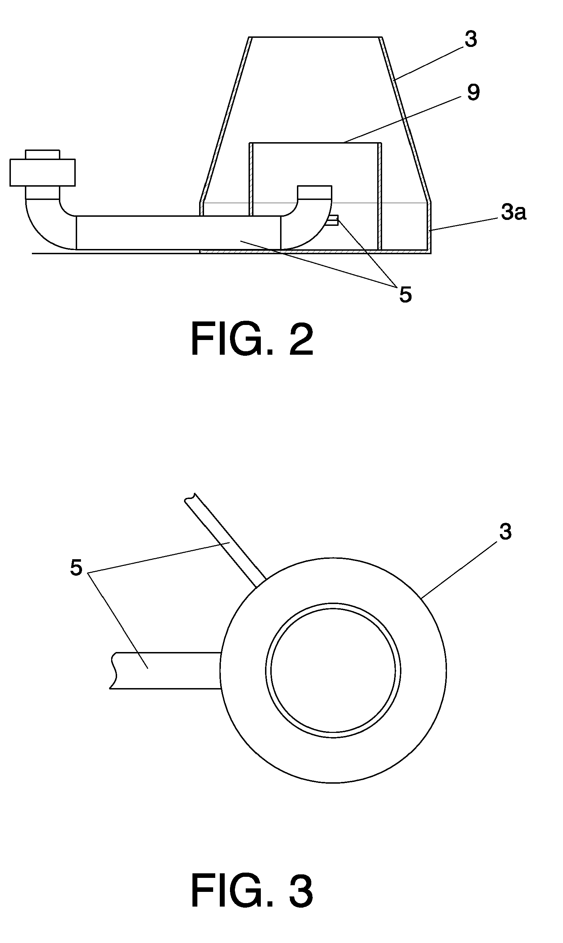

The nozzle (3), shown in figures 2 and 3, is housed in the centre of the base of the recipient (1) and features a truncated-conical configuration, being wider at its base and getting narrower at its upper end. Said nozzle (3) has an inner concentric lid (9) and a slightly smaller diameter than the base of the nozzle (3). Situated in said peripheral base of the nozzle (3) is a vertical section (3a), represented in figure 2, which is inserted into the lower surface of the recipient (1), and wherethrough circulates the piping (5) which introduces the water saturated with air and the seawater.

## Claims

1. Particle separation tank (10) which permits the optimisation of the separation of floc particles present in seawater, **characterised in that** it comprises a recipient (1) intended to house seawater or wastewater, a sand filter (2) located in the lower part of the recipient (1), and a nozzle (3) situated above the sand filter (2) which propels a flow (4) towards the outer surface of the tank (10), said flow (4) being formed by the mixture of water saturated with air and seawater which has been submitted to a coagulation-flocculation process, said mixture being made inside the nozzle (3) and both types of water being introduced in the nozzle (3) by means of piping (5).

2. Particle separation tank (10) according to claim 1, **characterised in that** it further comprises a lid (8) of variable size and dimension.

3. Particle separation tank (10) according to claim 2, **characterised in that** the lid (8) features a circular, flat and narrow configuration.

4. Particle separation tank (10) according to claim 2, **characterised in that** the lid (8) is located in the central axis of the recipient (1), between the nozzle (3) and the outer surface of the tank (10).

5. Particle separation tank (10) according to claim 1, **characterised in that** the nozzle (3) features a truncated-conical configuration.

6. Particle separation tank (10) according to either of claims 1 or 5, **characterised in that** the nozzle (3) is housed in the centre of the base of the recipient (1).

7. Particle separation tank (10) according to any of claims 1, 5, or 6, **characterised in that** the nozzle (3) has an inner lid (9).

8. Particle separation tank (10) according to claim 1, **characterised in that** the nozzle (3) features a vertical section (3a) in its peripheral base which is inserted into the lower surface of the recipient (1), and wherethrough circulates the piping (5) which introduces the water saturated with air and the seawater.
